(19)

Europäisches
Patentamt
European
Patent Office
Office européen
des brevets

(11) **EP 3 109 771 A1**

(12) **EUROPEAN PATENT APPLICATION**

(43) Date of publication:
    **28.12.2016 Bulletin 2016/52**

(51) Int Cl.:
    ***G06F 17/18*** *(2006.01)*

(21) Application number: **15173150.2**

(22) Date of filing: **22.06.2015**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **MA**

(71) Applicants:
    • **Deutsche Telekom AG
      53113 Bonn (DE)**
    • **Technische Universität Berlin
      10623 Berlin (DE)**

(72) Inventors:
    • **Swaminathan, Rahul
      10435 Berlin (DE)**

    • **Wechsung, Ina
      10589 Berlin (DE)**
    • **Zeidler, Stefan
      13467 Berlin (DE)**
    • **Grothe, Andreas
      10785 Berlin (DE)**
    • **Rederer, Andreas
      12249 Berlin (DE)**
    • **Knabner, Alexander
      15711 Neue Mühle (DE)**

(74) Representative: **Vossius & Partner
    Patentanwälte Rechtsanwälte mbB
    Siebertstrasse 3
    81675 München (DE)**

Remarks:
    Amended claims in accordance with Rule 137(2)
    EPC.

(54) **METHOD, DISTRIBUTED SYSTEM AND DEVICE FOR EFFICIENTLY QUANTIFYING A
    SIMILARITY OF LARGE DATA SETS**

(57)    The present invention is directed towards an efficient computation of similarity values of large data sets. According to the present invention, it is possible to handle large data sets even with poor hardware equipment. Data sets are classified and furthermore, according to the assigned class, subsequent operations are selected. Special focus of the suggested subject matter lies on hardware requirements, which are considered towards enhanced resource efficiency.

**EP 3 109 771 A1**

## Description

The present invention is directed towards a computer implemented method which allows a comparison of at least two data sets regarding their similarity under consideration of specific hardware requirements. While data sets may be of a large extent specific scenarios require a resource efficient computation of similarity metrics. Especially in a mobile scenario hardware constraints are of special importance. The present invention is furthermore directed towards a distributed system for efficiently computing a similarity value of large data sets along with a respective device. Furthermore, a computer readable medium containing program instructions for causing a computer to perform the respective method is suggested.

Known methods already provide reasonable scores of a computation of similarity values but typically do not aim at specific hardware requirements. The underlying assumption is typically that hardware infrastructures are scalable and therefore computation time and hardware resources do not have to be considered explicitly. Known methods set the focus on an exact computation of similarity values. This is also reached by the suggested subject matter, which in addition takes hardware requirements into account.

Woo, Mi-Ja; Reiter, Jerome P.; Oganian, Anna; and Karr, Alan F. (2009) "Global Measures of Data Utility for micro data Masked for Disclosure Limitation," Journal of Privacy and Confidentiality: Vol. 1: Iss. 1, Article 7 discloses quantitative measures of data utility for masked micro data, with the aim of improving disseminators' evaluations of competing masking strategies. The measures, which are global in that they reflect similarities between the entire distributions of the original and released data, utilize empirical distribution estimation, cluster analysis, and propensity scores.

Mantel, N. "The detection of disease clustering and a generalized regression approach", Cancer Research 27: 209-220 proposes that statistical power can be improved by applying a reciprocal transform to specific separations in the context of the suggested detection of disease clustering and generalized regression approach. While a permutational approach can give valid probability levels for any observed association, for reasons of practicability, it is suggested that the observed association be tested relative to its permutational variance. Formulas and computational procedures for doing so are given.

Several approaches are introduced in the literature, which address the computation of similarity values under consideration of the underlying data sets. Typically, known methods are fine-tuned regarding special parameters towards the desired outcome. Also known from the prior art are specific approaches tailored to special scenarios such as language processing. Hence, a data set may also be formed by a text corpus which is compared to another text regarding their similarity. In this way semantics of two text corpora can be compared.

Further known approaches deal with the estimation of data sets which are to be modeled under consideration of already gathered data sets. Hence, it is possible to identify and simulate changes over a specific period of time and simulate dynamics of underlying systems being represented by respective data sets.

However, known approaches address specific scenarios regarding the underlying data sets and desired outcomes. There is a strong need for approaches considering the underlying hardware infrastructures and aiming at hardware resource efficiency and computation time. Known approaches typically continue their computation even if it can already be identified that no similarity at all between data sets is given. This holds the drawback that hardware resources are occupied and the computation time is longer due to unnecessary further computation steps.

It is therefore an object of the present invention to provide a method for efficiently computing a similarity value of large data sets, which overcomes the aforementioned drawbacks. There is a need for a hardware efficient approach especially in a scenario covering extremely large data sets. It is furthermore an object to provide such a method, which allows not only a hardware-efficient computation but also considers time restrictions. It is furthermore an object of the present invention to provide a distributed system along with a device being operated by such a method. It is furthermore an object of the present invention to provide a computer-readable medium containing program instructions for causing a computer to perform the suggested methods.

The object is solved by the subject-matter of a computer-implemented method according the independent claim 1.

Hence, a computer-implemented method for efficiently computing a similarity value of large data sets is suggested. The method comprises a step of determining a first similarity value by applying a stored first similarity metric on a first variable from a first data set and a second variable from a second data set, wherein the similarity metric is selected as a function of a type of the first and the second variable. The suggested method furthermore comprises the step of determining an overall similarity value of the first data set and the second data set by iterating the step of determining the first similarity value for every variable pair of the first and the second data set. After doing so a step of assigning the first and the second data set a classifier as a function of the determined overall similarity value and a stored threshold value is performed. Furthermore, it is suggested to determine a second similarity value by applying a stored second similarity metric on the first and the second data set in case a predetermined classifier is assigned.

In general, a similarity value provides an indication of how similar two data sets are according to a specific metric. Such a similarity value may be a numeric value, which is chosen from a specific range of numbers. The suggested method can be performed computer-implemented in an automated fashion. For doing so respective storage devices are provided which provide similarity metrics which can be chosen under consideration of the underlying data types of the data sets. It is possible to apply known methods for providing the first or the second similarity metric, which are to be specified for instance in a respective configuration file. One can then choose the appropriate similarity metric as a function of the underlying usage scenario. For determining a similarity value at least one variable from a first data set is compared with at least one further variable from a second data set. In this way variables of both sets can be compared pair wise.

It may be of advantage to consider a specific order of the variables of the respective data sets. The data sets may for instance be formed by a vector, which means a first vector providing a first data set is compared with a second vector providing a second data set. Hence, one may respectively compare variables at a specific position within each of the vectors. In a further usage scenario one may consider an unordered data set which means that each and every possible pair of variables taken from the first set and from the second set is to be compared. The person skilled in the art appreciates further approaches towards selecting variable pairs from the provided data sets. The similarity metric itself is selected under consideration of the type of the first and the second variable. Such a selection may be performed by providing a configuration file, which indicates which metric is to be applied in which usage scenario or in response to a specific type of the two variables to be compared. Comparing variables pair by pair is possibly accomplished in parallel by comparing several pairs at a specific time.

Furthermore, an overall similarity value of the first data set and the second data set is computed once the first similarity values for each selected pair of a variable are calculated. The meaning of every variable pair refers to the variable pairs as being formed by the first method step. It may be the case that every variable pair then refers to every possible variable pair, while it may be also of advantage to consider every variable pair which is computed in the first method step. In one example, where the data sets are provided by vectors not every possible variable pair is considered when determining an overall similarity value, but only those pairs having the same order within the vector are considered.

After having determined an overall similarity value of two data sets, a specific value is identified which classifies the relation between the two data sets by a respective classifier. This classifier is considered regarding the further computation of the similarity of the two data sets. Hence, the overall similarity value may be referred to as an intermediate value which can be further defined. Such a classifier may for instance indicate that a data fit is good or that a data fit is not good. The notion of good refers to an expectation regarding the similarity of two data sets.

In case they are not similar to a certain extent further processing can be avoided as for a specific usage scenario only highly similar data sets are to be considered. In case a classifier indicating that the data fit is good, meaning that the similarity meets certain expectations, the classifier allows for a further refinement of the similarity value. Such a refinement may be reached by performing the step of determining a second similarity value. For doing so a respective threshold value needs to be considered, which indicates which classifier is assigned. For instance, if two data sets are similar to an extent of 50% or less a classifier indicating that the data fit is not good can be assigned. Hence, no further processing is required. In case two data sets have a similar percentage of above 50%, the data fit is good and a respective classifier is assigned. Once such a classifier indicating that the date fit is good is identified, a second similarity value can be applied.

It is a special advantage that a very fine grained similarity value is computed considering very strict hardware restrictions. In case the data sets are not appropriate regarding a specific usage scenario only a first efficient phase of checking similarity is accomplished. Only for those candidates which are highly similar above a certain threshold a further second phase is accomplished. Hence, not every large data set needs to be fully considered regarding its similarity towards a second data set. First, an efficient similarity metric can be applied by determining a first similarity value and the overall similarity value. Afterwards in case it seems worthwhile a second similarity value can be computed, which is accomplished to a more sophisticated similarity metric. Such a sophisticated similarity metric may require additional hardware resources and computation time. This is accomplished as it has already been judged that such a computation is worthwhile and the two data sets to be compared meet the initial requirements. In this way hardware resource intense metrics are not applied on data sets which are not similar at all. After all this saves hardware resources and computation time in contrast to known methods.

The scope of the present invention is not limited to a classifier indicated only two classes of similarity between two data sets. The person skilled in the art may identify further classifiers which then suggest their own metric for further computation. Regarding the terminology a classifier refers to an indication of how similar two data sets are. Hence, the terminology does not conflict with further classifiers being used by respective evaluation methods. These may define their own classifiers, which may address different concepts regarding the respective computation method.

According to a further aspect of the present invention the type of the variables is formed by one of a group of types comprising ordinal data, nominal data, interval data and ratio data. This provides the advantage that several data types can be compared, which can be accomplished straight forwarded especially in case the type of both variables from a pair of variables is the same. It may also be possible to compare different types of variables such as a string, which is to be converted into a numeric type to be compared with a numeric type. Hence, the suggested method may also comprise further steps of data type conversion.

According to a further aspect of the present invention, for every specific variable type one similarity metric is stored. This provides the advantage that a specific metric for numeric values can be applied and a further metric for storing data sets, such as text corpora, can be applied.

According to a further aspect of the present invention, the first similarity metric applies one of a group of similarity metrics comprising a $\chi^2$-test, a Kolmogorov-Smirnov test and respective variations thereof. This provides the advantage that known methods which are already implemented can be reused regarding a computation of a first similarity metric.

According to a further aspect of the present invention, the assigned classifier indicates at least one relation of the overall similarity value and the stored threshold value of a group of relations. This provides the advantage that one can indicate whether the overall similarity is below a certain threshold, equals a certain threshold or is above said threshold. Hence, it is possible to define several groups or classes which can be reflected by the respective classifier.

According to a further aspect of the present invention, the stored second similarity metric applies one of a group of metrics comprising a machine learning test, a machine learning base classification, a logistic regression test, a Kolmogorov-Smirnov test, computing a matrix of statistical test results over a period of time split into time windows, a Mantel test for correlation comparisons, a $L_2$ norm based metric, a metric considering time varying correlation comparisons and respective variations thereof. This provides the advantage that for the second similarity metric, a more complex algorithm can be applied which is only accomplished in case this has been considered worthwhile.

According to a further aspect of the present invention, the variable values of the first data set are measured by a sensor and the variable values of the second data set are estimated. This provides the advantage that a first set of data can be provided by means of logging certain real-world variables and furthermore a model of the real-world can be estimated. Hence, it is possible to simulate a specific behavior of measured real-world data. Such a sensor may detect values such as a temperature, a specific force or it may be formed by an image sensor for measuring image data. The person skilled in the art appreciates that further sensors can be applied.

According to a further aspect of the present invention, the types of variables are adapted such as a joint similarity metric can be applied. This provides the advantage that data type conversions are performed, such that a joint similarity metric considering data sets of different data types can be computed.

According to a further aspect of the present invention, the classifier indicates a quality of the first set fitting the second data set. This provides the advantage that the classifier reflects an estimation of how similar two data sets are by applying certain quality constraints.

According to a further aspect of the present invention, the method is offered over a communication network. This provides the advantage that the suggested method steps can be performed in a distributed way and can be provided either wirelessly and/or wire-based to respective end devices.

According to a further aspect of the present invention, computing similarity scores can be performed in parallel by first dividing the data sets into coherent, for instance time-based, blocks and then processing each block independently using the suggested method. Then, the vector or computer scores for all blocks are together used to determine an effective overall score of goodness of similarity. This provides the advantage that the method steps can be performed in parallel and can handle several variable pairs simultaneously, for instance by applying a multi-core processor or a computer cluster. Hence, determining similarity values of variables is performed in parallel for at least two variable pairs.

The object is also solved by a distributed system for efficiently computing a similarity value of large data sets, comprising a means being arranged to determine a first similarity value by applying a stored first similarity metric on a first variable from a first data set and a second variable from a second set, wherein the similarity metric is selected as a function of a type of the first and the second variable, a means being arranged to determine an overall similarity value of the first data set and the second data set by iterating the step of determining the first similarity value for every variable pair of the first and the second data set. The distributed system further comprises a means being arranged to assign the first and the second data set a classifier as a function of the determined overall similarity value and a stored threshold value, and a means being arranged to determine a second similarity value by applying a stored second similarity metric on the first and the second data set in case a predetermined classifier is assigned.

The suggested distributed system for efficiently computing a similarity value of large data sets can be provided by means of several distributed network components. For instance several computer systems forming a computer cluster can be operated. This provides the advantage that several of the suggested method steps can be performed in parallel. For instance a variable pair, one variable from the first set and one variable from the second set, can be compared by applying the similarity metric, while in a parallel step a further pair is compared. The person skilled in the art appreciates that several approaches for partitioning the sets of variables into several different partitions can be performed. Afterwards these partitions of variables can be compared in parallel. The distributed system can furthermore rely on already running database servers, which provide the sets of variables. For fostering scalability the distributed system can be enhanced with additional hardware resources.

The object is also solved by a device for efficiently computing a similarity value of large data sets, comprising a means being arranged to determine a first similarity value by applying a stored first similarity metric on a first variable from a first data set and a second variable from a second set, wherein the similarity metric is selected as a function of a type of the first and the second variable, means being arranged to determine an overall similarity value of the first data set and the second data set by iterating the step of determining the first similarity value for every variable pair of the first and the second data set. The device further comprises means being arranged to assign the first and the second data set a classifier as a function of the determined overall similarity value and a stored threshold value and means being arranged to determine a second similarity value by applying a stored second similarity metric on the first and the second data set in case a predetermined classifier is assigned.

The device may be formed by a single computer or by a cell phone. The suggested approach is hardware resource efficient as two stages are performed; an overall computation of similarity and a rigorous similarity computation. Not all data is processed according to the hardware resource intense step of a rigorous similarity computation, which provides the technical advantage that the suggested approach can also be performed in a mobile scenario. Applying the provided method therefore can effectively decrease hardware constraints and network workload.

Furthermore, the object is solved by a computer-readable medium containing program instructions for causing a computer to perform the method as suggested above.

One aspect of the claimed subject-matter is the verification if synthesized data computed based on predetermined models, fits the statistical norms and patterns of raw real data.

Synthetic model based simulated data depends on the mathematical models used to "learn" relationships between various elements of the real data (in the past). These models are then used to generate new data for time periods in the future as a prediction mechanism. It is one aspect to test and quantify the goodness of synthesized data against new incoming real data. While learning methods verify goodness of fit to their modeling parameters, it is one aspect of the present invention to evaluate the synthetic data's statistical similarity to new real data.

In the following, methods to check statistical similarity are described. The system presented here offers the possibility to compare and evaluate similarity between synthetically generated (or otherwise) data and real data. There is no reason to exclude the case where we wish to check and test the similarity between two independently obtained data sets, where each of the data set could actually be either synthetic or real or both.

In the following methods to evaluate similarities are described. Given data set $S_1$ and $S_2$ we wish to evaluate the similarity of $S_1$ to $S_2$. In this case both $S_1$ and $S_2$ could be either synthetic or real data, which means measured or estimated. The tool proposed according to an aspect of the present invention allows the computation of various similarity metrics.

The tool and system being defined here are not restricted only to the set of implementations being presented in this document. The scope of this disclosure is not limited to the presented method's implementation of the similarity measurement tool. This only serves as a demonstration of an aspect of the present invention.

In order to define similarity we can define statistical similarity at various points within the dataset based on the manner in which the data needs to be interpreted. Therefore we can define the statistical similarity as a multi-dimensional vector or an effective score being also computable from such a vector.

When the data varies as a function of time, our methods allow for such time varying patterns and appropriately estimate similarity metrics either jointly using learning tools or other statistical approaches.

In the following, Computing Statistical Metric Vectors are described. One simple way to compute statistics is for example to consider all the various events that occur over time and compute a hierarchical histogram of events over multiple time frames. Over a large period of time various cuts of the time scale can provide various statistics and trends that reflect the temporal fluctuations of events. However, this approach can be further generalized in considering time varying records in huge datasets.

The proposed method considers all types of data elements such as interval, ratio, cardinal or nominal, while automatically applying the right tests in order to compute and determine the similarity scores and vectors.

In the following, Multi-stage statistical verification is described. Various metrics to compare the statistical similarities between any two datasets $S_1$ and $S_2$ are available. In order to so, we address the problem by a two stage approach wherein we (i) first look into the overall statistical distributions of two datasets and (ii) then consider a time varying characteristics in statistics of the dataset. In this second step we propose to employ a more rigorous statistical test across the entire two data sets in order to determine their similarities.

This multi-stage approach as illustrated throughout the figures is computationally faster with a lower overhead by detecting early on if the two datasets are not similar at all.

In the following, the invention will be described merely by way of illustration with reference to the accompanying Figures which show:

Fig. 1          a flowchart illustrating a computer implemented method according to an aspect of the present invention;

Fig. 2          a flowchart illustrating a method for efficiently computing a similarity value according to a further aspect of the present invention;

Fig. 3          a more detailed flowchart for illustrating the method for efficiently computing a similarity value according to a further aspect of the present invention; and

Fig. 4A and 4B          tables representing results of intermediate steps of the method for efficiently computing a similarity value according to an aspect of the present invention.

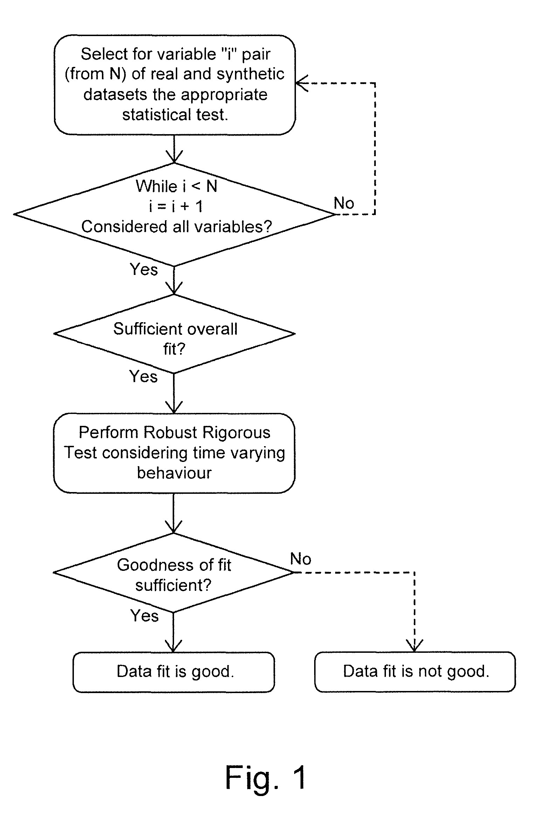

Figure 1 shows a multi stage method to measure data utilization or similarity between two data sets. We first consider the overall statistical similarity of the two data sets. Only when the two data sets are 'sufficiently' similar in their overall characteristics do we then consider the rigorous test over the data sets that include time varying characteristics and interdependencies.

In the following, overall Statistical Distribution is described as an aspect of the present invention. In order to determine the overall statistical similarities between two data sets we consider every "variable" individually. In this manner every data type within the variable (interval/ratio, cardinal or nominal) can be individually tested using standard statistical metrics.

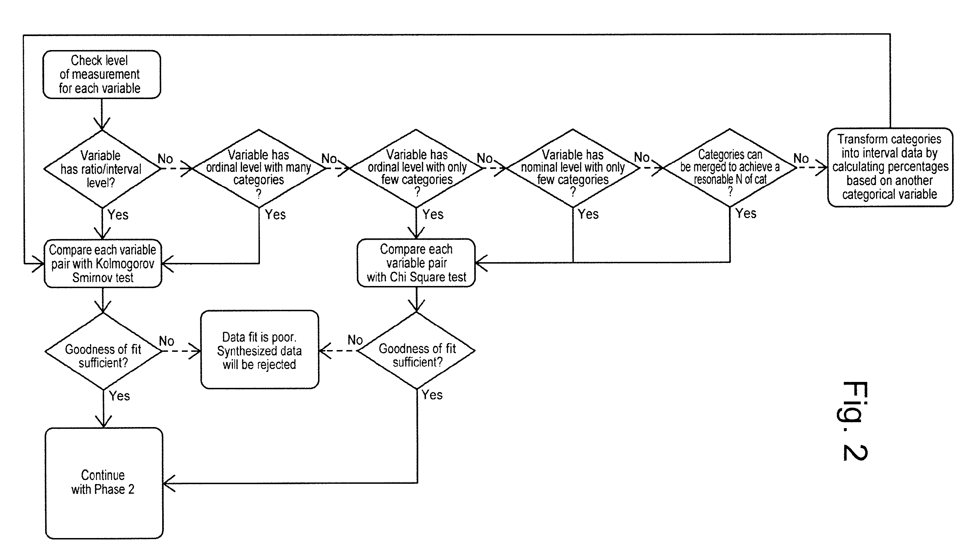

Figure 2 illustrates one possible method to estimate the overall statistical similarity scores per variable. Especially figure 2 shows an overall statistical testing of every variable within two data sets. Depending on the type of data, we apply either the Chi-square test or the Kolmogorov-Smirnov test.

Metrics for Ordinal or Nominal Data also form an aspect of the present invention. The basic $\chi^2$-test is presented that can be used in order to measure the overall similarity of categorical data. Consider a real data dataset $S_1$ and the corresponding synthetic dataset $S_2$. Within these data sets we consider now any one variable (column of data) that is either ordinal or nominal with $C$ categories. An example of such a variable includes "Day of the week" that has seven categories *(Monday, Tuesday, Wednesday, Thursday, Friday, Saturday, and Sunday)*. We are then interested in the average statistical probabilities or frequencies of each of these categories and wish to compare their frequencies in one data set with the other.

In particular we estimate the expected probability using one data set and use it to determine the frequency in the other in order to determine our metric that is the $\chi^2$-test given by:

$$\chi^2 = \sum_{i=1}^{C} \frac{\left(o_1^i - N_1 e_2^i\right)^2}{e_2^i}$$

Where, $e_2^i = \frac{o_2^i}{N_2}$ is the estimated probability of occurrences of category $i$ within $N_2$ records within dataset $S_2$. The final score is obtained by calculating the $\chi^2$-score and the corresponding degrees of freedom (df). Based on the $\chi^2$-value and the degrees of freedom the corresponding p-value will be determined based on the $\chi^2$-distribution. The *p*-value gives the probability that the resulting $\chi^2$ value or an more extreme (i.e. larger) $\chi^2$-value is obtained under the assumption of the hypothesis "both samples are equally distributed". This means, a small *p*-value indicates a small probability of having equally distributed (similar) samples.

Metrics for Interval or Ratio Data can also be applied. When dealing with variables that are either of interval or ratio type we depend on the Kolmogorov-Smirnov test in order to determine the goodness of fit on the complete data set (overall statistical similarity). As described earlier, again, every variable is treated one at a time when comparing across two data sets $S_1$ and $S_2$.

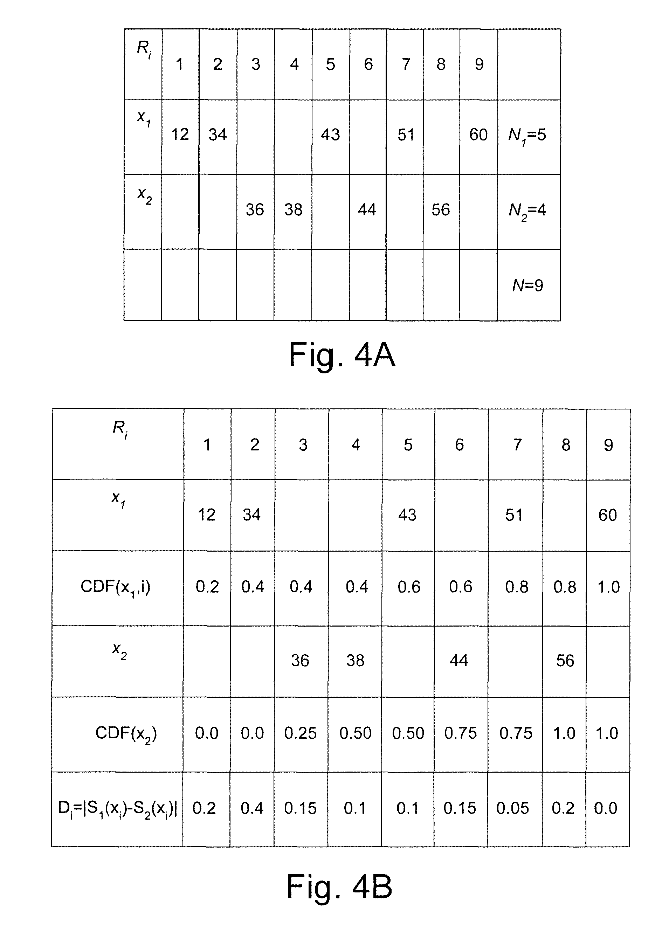

We describe this test with the aid of an example data set. Let us assume the specific variable under consideration within the two datasets are said to be $S_1 = \{12, 34, 43, 51, 60\}$ and $S_2 = \{36,38,44,56\}$. Here $S_1$ has $N_1$=5 elements, while $S_2$ has $N_2$=4 elements (members). We then consider the joint sorted list of elements when constructing the cumulative density function across both datasets as shown in the table of figure 4A.

For the joint dataset, one can then compute the cumulative probabilities of the overall distribution as shown in the table according to figure 4B.

The above CDFs are computed considering every element within its own dataset. However, their differences $D_i$ are computed over the joint length $N = N_1 + N_2$. Once computed the maximum deviation $D_{max}$ (difference) in CDFs (0.4 in this example) is then taken as the measure of dissimilarity when computing the Kolmogorov-Smirnov test. Based on the test statistic $D_{max}$ and number of elements in each data set ($N_1$ and $N_2$) the corresponding p-value will be determined based on the Kolmogorov-Smirnov distribution. The *p*-value gives the probability that the resulting $D_{max}$ value or an extremer (i.e. larger) $D_{max}$ value is obtained under the assumption of the hypothesis "both samples are equally distributed."

In the following the Rigorous Statistical Distribution is introduced as an example for implementing the suggested approach. The second phase of the proposed metrics for data similarity is based on a more rigorous test across the complete data sets. We propose two completely different approaches. The first is based on machine learning tools based classification, while the second approach takes a more deterministic approach using temporal correlations across the entire data set.

A classification based approach also forms an aspect of the present invention. The key idea behind the classification based machine learning approach is to treat all the variables that were treated independently in the previous phase together. We look now at the joint data sets $S_1$ and $S_2$ and learn the characteristics within the variables in order to determine the labels "$S_1$" and "$S_2$" respectively. This is essentially a two-class classification or logistic regressions problem. Since we know the two data sets apart, the class labels are known a priori. The argumentation for this approach is the following, if the two data sets $S_1$ and $S_2$ are indeed so different in their parameter spaces (defined by the variables), then one should learn the classification fairly easily. Then, going over the entire data set again, one should be able to robustly assign every record to the correct label without much "confusion".

Since logistic regression essentially provides the probability that a given vector z belongs to a specific label (say $S_1$), then testing the regression on the input records would give us for every record the probability of it belonging to either "$S_1$" or "$S_2$" respectively. These probabilities can then be used together to obtain an effective score on similarity of the two data base. Ideally the score will be close to 0.5 thereby being unable to tell the two data sets apart.

Logistic regression over the parameter space $\theta$, for the feature space **z**, can be defined as:

$$H(\theta, z) = \frac{1}{(1 + e^{-\theta z})}$$

The idea being to first use all the data within the two labeled datasets $S_1$ and $S_2$ to determine $\theta$. Next we iterate over every record z in the data sets and apply the learnt $\theta$ in order determine $H(\theta, z)$. Thus, when $\theta z$ approaches 0, the probability approaches 0.5, thereby implying that the record **z** could be equally likely to belong to set "$S_1$" or "$S_2$", thereby implying they are very similar.

The key approach is to use the labeled "Real" and "Synthetic" data sets in order to first determine the logistic regression parameter $\theta$. Then, for the real as for the synthetic data, we consider every data record **z** and compute the "residue" or $H(\theta, z)$. The idea being that both for the real and the synthetic, the distribution of the computed probabilities or $H(\theta, z)$ must be similarly distributed. This similarity is then tested using the Kolmogorov-Smirnov test on the estimated values for or $H(\theta, z)$ over the "real" and "synthetic" datasets

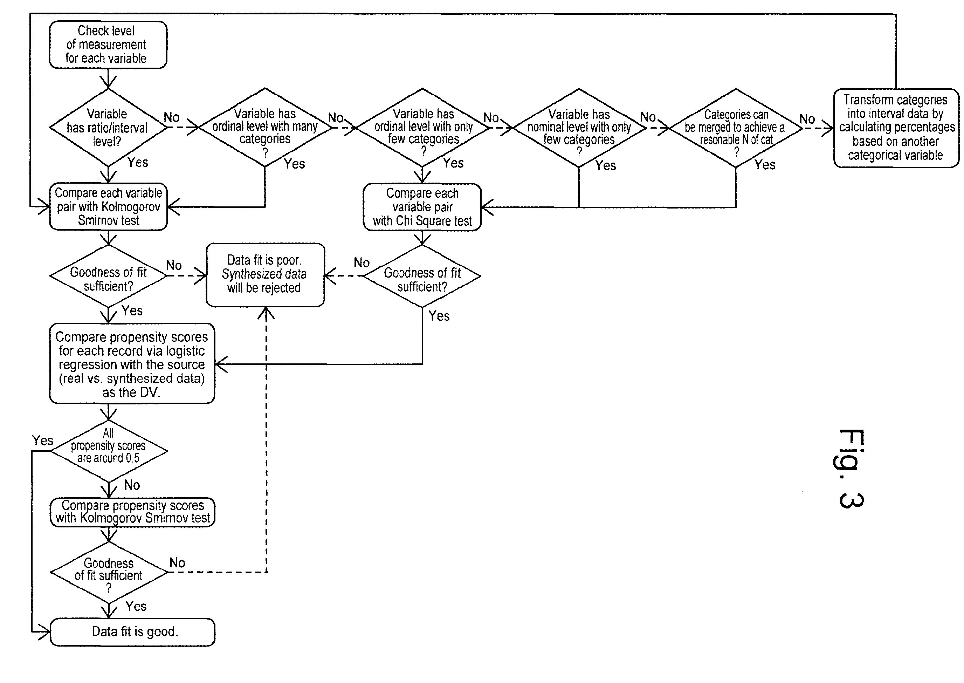

Figure 3 shows an algorithmic flow towards computing statistical similarities in two data sets. First every column (variable) is individually tested for overall statistical similarities. After all the variables are tested for overall statistical similarities and pass the test with a sufficient "goodness of fit" only will the complete data sets be tested together in order to rigorously estimate whether the two data sets are differentiable significantly or not. The above approach tests every variable based on its data type such as interval/ratio or ordinal/nominal.

A deterministic approach to be applied is introduced in the following. The other possible approach we present is that of computing a matrix of statistical tests results over a period of time split into time windows. The basic idea is to break up the possible large time window of the overall data into smaller time windows. Within each window, if the statistical measures match, then not only is the data over the entire time duration similar (on average) but also is similar locally in time. This approach is more deterministic in that it assumes time to be one of the variables within the data sets and that the other variables could have possible inter variable relationships that vary across time.

We then need to define a time window **T** within which correlations (or distances) between all variables is computed. In computing the correlation matrix $V_j$ for given dataset $S_j$ as:

$$V_j = \{v_1, v_2, \ldots v_i, \ldots v_N\}$$

Where every element $v_i$ corresponds to the correlations (or distances) between all possible variable pairs, within the $i$th time window: $T \cdot (i - 1) \leq t_i < T \cdot i$. Thus, every element $v_i$ corresponds to a vector that contains the correlations for all the pairs of variables within a given dataset $S_j$. The problem of no comparing two possibly time varying datasets is that of comparing the correlation time window based matrices $V_1$ and $V_2$ respectively.

In the following, Mantel Test for Correlation Comparisons is described as an aspect of the present invention. The matrices $V_1$ and $V_2$ can be compared using the Mantel-test that tests the correlation between two matrices of the same dimensions; the matrices can contain either measures of similarity (i.e. correlations) or dissimilarities, e.g. distances. The standardized Mantel statistic (Mantel r) is calculated as the usual Pearson correlation coefficient between the two matrices. The p-value of the Mantel's test test statistic Mantel-r is estimated using permutation procedures, in which the rows and/or columns of the distance matrices are randomly rearranged. The reasoning is that if the null hypothesis "there is no relation between the two matrices" is true, then permuting the rows and columns of the matrix should be equally likely to produce a larger or a smaller coefficient.

In the following, alternative metrics for Time Varying Correlation are described. An alternative approach to verification of the similarity of the data sets or measuring similarity based on the above time window based correlation matrices is to treat the matrices again as a large independent dataset. Again we would have two sets corresponding to the "real" and "synthetic" datasets of correlation values across all the variable pairs (number of columns) and number of time windows (number of rows). We can easily now apply the classification approach defined earlier on the entire datasets rather on these reduced (aggregated) correlations. Applying the same approach in the classification based approach we can estimate the probability score of the two data sets being similar.

Yet another (amongst many) approaches include the use of the $L_2$ norm of the Matrix differences or normalized $L_2$ norm $\frac{\|V_1 - V_2\|_2}{N}$.

Hence, a method, a distributed system and a device for efficiently computing similarities between large data sets are suggested. As set forth above, several similarity metrics can be applied. The person skilled in the art appreciates that the mentioned metrics, mathematical approaches and algorithms are merely a way of illustration of concepts falling within the scope of the present invention. The person skilled in the art appreciates that a two-phase approach is provided, wherein first an efficient computation is performed and afterwards, in case a specific classifier is assigned a more sophisticated hardware computation is performed. This provides the advantage that approaches, which typically require a large occupation of hardware resources, are only performed for good candidates of similar data sets. On the other hand, data sets, which are not similar at all, which can be identified by means of a respective threshold, are not considered for extensive hardware resource consumption. Hence, technical features of the underlying hardware infrastructure are considered.

A tool to test and quantify the similarity of two data sets is suggested as an example of the synthetic generation of data based on models learnt from real data. This provides a stand-alone independent method to test the integrity and similarity of synthesized data independent of the underlying models used to generate the data. A subsequence of such a method can result in novel means to synthesize synthetic data itself. The tool will allow third party users to test their own synthesized data against real data. This is considered as a possible service offering.

Furthermore a parallelizable aspect to computing similarity scores is introduced by first dividing the data sets into coherent (perhaps time based) blocks and then processing each block independently using the aforementioned steps. Then the vector of computer scores for all blocks is used to determine an effective overall score for goodness of similarity.

The person skilled in the art appreciates that the aforementioned concepts are presented merely for illustrating the underlying idea of the suggested subject-matter. The implementations can as well rely on further legacy concepts and can be implemented without reference to the mentioned implementations. The described concepts are typically not bound to a specific hardware environment but are able to consider the underlying hardware constraints.

**Claims**

1. A computer-implemented method for efficiently computing a similarity value of large data sets, comprising:

   - determining a first similarity value by applying a stored first similarity metric on a first variable from a first data set and a second variable from a second data set, wherein the similarity metric is selected as a function of a type of the first and the second variable;
   - determining an overall similarity value of the first data set and the second data set by iterating the step of determining the first similarity value for every variable pair of the first and the second data set;
   - assigning the first and the second data set a classifier as a function of the determined overall similarity value and a stored threshold value; and
   - determining a second similarity value by applying a stored second similarity metric on the first and the second data set in case a predetermined classifier is assigned.

2. The method according to claim 1, wherein the type of the variables is one of a group of types comprising: ordinal data, nominal data, interval data and ratio data.

3. The method according to claim 2, wherein for every specific variable type one similarity metric is stored.

4. The method according to any preceding claim, wherein the first similarity metric applies one of a group of similarity metrics comprising: a chi square test, a Kolmogorov-Smirnov test and respective variations thereof.

5. The method according to any preceding claim, wherein the assigned classifier indicates at least one relation of the overall similarity value and the stored threshold value of a group of relations.

6. The method according to any preceding claim, wherein the stored second similarity metric applies one of a group of metrics comprising: a machine learning test, a machine learning based classification, a logistic regression test, a Kolmogorov-Smirnov test, computing a matrix of statistical tests results over a period of time split into time windows, a Mantel test for correlation comparisons, a $L_2$ norm based metric, a metric considering time varying correlation comparisons and respective variations thereof.

7. The method according to any preceding claim, wherein the variable values of the first data set are measured by a sensor and the variable values of the second data set are estimated.

8. The method according to any preceding claim, wherein the types of the variables are adapted such that a joint similarity metric can be applied.

9. The method according to any preceding claim, wherein the classifier indicates a quality of the first data set fitting the second data set.

10. The method according to any preceding claim, wherein the method is offered over a communication network.

11. The method according to any preceding claim, wherein determining similarity values of variables is performed in parallel for at least two variable pairs.

12. A distributed system for efficiently computing a similarity value of large data sets, comprising:

- a means being arranged to determine a first similarity value by applying a stored first similarity metric on a first variable from a first data set and a second variable from a second data set, wherein the similarity metric is selected as a function of a type of the first and the second variable;
- a means being arranged to determine an overall similarity value of the first data set and the second data set by iterating the step of determining the first similarity value for every variable pair of the first and the second data set;
- a means being arranged to assign the first and the second data set a classifier as a function of the determined overall similarity value and a stored threshold value; and
- a means being arranged to determine a second similarity value by applying a stored second similarity metric on the first and the second data set in case a predetermined classifier is assigned.

13. A device for efficiently computing a similarity value of large data sets, comprising:

- a means being arranged to determine a first similarity value by applying a stored first similarity metric on a first variable from a first data set and a second variable from a second data set, wherein the similarity metric is selected as a function of a type of the first and the second variable;
- a means being arranged to determine an overall similarity value of the first data set and the second data set by iterating the step of determining the first similarity value for every variable pair of the first and the second data set;
- a means being arranged to assign the first and the second data set a classifier as a function of the determined overall similarity value and a stored threshold value; and
- a means being arranged to determine a second similarity value by applying a stored second similarity metric on the first and the second data set in case a predetermined classifier is assigned.

14. A computer-readable medium containing program instructions for causing a computer to perform the method of claims 1 to 11.

**Amended claims in accordance with Rule 137(2) EPC.**

1. A computer-implemented method for computing, on a mobile device, a similarity value of large data sets, comprising:

- determining a first similarity value by applying a stored first similarity metric on a first variable from a first data set and a second variable from a second data set, wherein the similarity metric is selected as a function of a type of the first and the second variable;
- determining an overall similarity value of the first data set and the second data set by iterating the step of determining the first similarity value for every variable pair of the first and the second data set;
- assigning the first and the second data set a classifier as a function of the determined overall similarity value and a stored threshold value; and
- determining a second similarity value by applying a stored second similarity metric on the first and the second data set in case a predetermined classifier is assigned.

2. The method according to claim 1, wherein the type of the variables is one of a group of types comprising: ordinal data, nominal data, interval data and ratio data.

3. The method according to claim 2, wherein for every specific variable type one similarity metric is stored.

4. The method according to any preceding claim, wherein the first similarity metric applies one of a group of similarity metrics comprising: a chi square test, a Kolmogorov-Smirnov test and respective variations thereof.

**5.** The method according to any preceding claim, wherein the assigned classifier indicates at least one relation of the overall similarity value and the stored threshold value of a group of relations.

**6.** The method according to any preceding claim, wherein the stored second similarity metric applies one of a group of metrics comprising: a machine learning test, a machine learning based classification, a logistic regression test, a Kolmogorov-Smirnov test, computing a matrix of statistical tests results over a period of time split into time windows, a Mantel test for correlation comparisons, a L2 norm based metric, a metric considering time varying correlation comparisons and respective variations thereof.

**7.** The method according to any preceding claim, wherein the variable values of the first data set are measured by a sensor and the variable values of the second data set are estimated.

**8.** The method according to any preceding claim, wherein the types of the variables are adapted such that a joint similarity metric can be applied.

**9.** The method according to any preceding claim, wherein the classifier indicates a quality of the first data set fitting the second data set.

**10.** The method according to any preceding claim, wherein the method is offered over a communication network.

**11.** The method according to any preceding claim, wherein determining similarity values of variables is performed in parallel for at least two variable pairs.

**12.** A distributed system for computing, on a mobile device, a similarity value of large data sets, comprising:

- a means being arranged to determine a first similarity value by applying a stored first similarity metric on a first variable from a first data set and a second variable from a second data set, wherein the similarity metric is selected as a function of a type of the first and the second variable;
- a means being arranged to determine an overall similarity value of the first data set and the second data set by iterating the step of determining the first similarity value for every variable pair of the first and the second data set;
- a means being arranged to assign the first and the second data set a classifier as a function of the determined overall similarity value and a stored threshold value; and
- a means being arranged to determine a second similarity value by applying a stored second similarity metric on the first and the second data set in case a predetermined classifier is assigned.

**13.** A mobile device for computing a similarity value of large data sets, comprising:

- a means being arranged to determine a first similarity value by applying a stored first similarity metric on a first variable from a first data set and a second variable from a second data set, wherein the similarity metric is selected as a function of a type of the first and the second variable;
- a means being arranged to determine an overall similarity value of the first data set and the second data set by iterating the step of determining the first similarity value for every variable pair of the first and the second data set;
- a means being arranged to assign the first and the second data set a classifier as a function of the determined overall similarity value and a stored threshold value; and
- a means being arranged to determine a second similarity value by applying a stored second similarity metric on the first and the second data set in case a predetermined classifier is assigned.

**14.** A computer-readable medium containing program instructions for causing a computer to perform the method of claims 1 to 11.

Fig. 1

Fig. 2

Fig. 3

Check level of measurement for each variable

Variable has ratio/interval level? — Yes → Compare each variable pair with Kolmogorov Smirnov test

Variable has ratio/interval level? — No → Variable has ordinal level with many categories? — Yes → Compare each variable pair with Kolmogorov Smirnov test

Variable has ordinal level with many categories? — No → Variable has ordinal level with only few categories? — Yes → Compare each variable pair with Chi Square test

Variable has ordinal level with only few categories? — No → Variable has nominal level with only few categories? — Yes → Compare each variable pair with Chi Square test

Variable has nominal level with only few categories? — No → Categories can be merged to achieve a resonable N of cat? — No → Transform categories into interval data by calculating percentages based on another categorical variable

Categories can be merged to achieve a resonable N of cat? — Yes → Compare each variable pair with Chi Square test

Compare each variable pair with Kolmogorov Smirnov test → Goodness of fit sufficient? — No → Data fit is poor. Synthesized data will be rejected

Goodness of fit sufficient? — Yes → Compare propensity scores for each record via logistic regression with the source (real vs. synthesized data) as the DV.

Compare each variable pair with Chi Square test → Goodness of fit sufficient? — No → Data fit is poor. Synthesized data will be rejected

Goodness of fit sufficient? — Yes → Compare propensity scores for each record via logistic regression with the source (real vs. synthesized data) as the DV.

Compare propensity scores for each record via logistic regression → All propensity scores are around 0.5 — Yes → Data fit is good.

All propensity scores are around 0.5 — No → Compare propensity scores with Kolmogorov Smirnov test → Goodness of fit sufficient? — No → Data fit is poor. Synthesized data will be rejected

Goodness of fit sufficient? — Yes → Data fit is good.

| $R_i$ | 1 | 2 | 3 | 4 | 5 | 6 | 7 | 8 | 9 | |
|---|---|---|---|---|---|---|---|---|---|---|
| $x_1$ | 12 | 34 | | | 43 | | 51 | | 60 | $N_1$=5 |
| $x_2$ | | | 36 | 38 | | 44 | | 56 | | $N_2$=4 |
| | | | | | | | | | | $N$=9 |

## Fig. 4A

| $R_i$ | 1 | 2 | 3 | 4 | 5 | 6 | 7 | 8 | 9 |
|---|---|---|---|---|---|---|---|---|---|
| $x_1$ | 12 | 34 | | | 43 | | 51 | | 60 |
| CDF$(x_1,i)$ | 0.2 | 0.4 | 0.4 | 0.4 | 0.6 | 0.6 | 0.8 | 0.8 | 1.0 |
| $x_2$ | | | 36 | 38 | | 44 | | 56 | |
| CDF$(x_2)$ | 0.0 | 0.0 | 0.25 | 0.50 | 0.50 | 0.75 | 0.75 | 1.0 | 1.0 |
| $D_i=|S_1(x_i)-S_2(x_i)|$ | 0.2 | 0.4 | 0.15 | 0.1 | 0.1 | 0.15 | 0.05 | 0.2 | 0.0 |

## Fig. 4B

Europäisches
Patentamt

European
Patent Office

Office européen
des brevets

# EUROPEAN SEARCH REPORT

Application Number

EP 15 17 3150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/198022 A1 (ZHANG WEI [CN]) 1 August 2013 (2013-08-01) * abstract * * paragraphs [0081], [0101] - paragraphs [0103], [0126], [0134]; figure 9 * | 1-14 | INV. G06F17/18 |
| X | US 2009/309984 A1 (BOURGAIN STEPHANE [FR] ET AL) 17 December 2009 (2009-12-17) | 1-7,9-14 | |
| A | * abstract; figure 3 * * paragraph [0059] * | 8 | |
| X | US 2007/253472 A1 (JANG WOO JIN [KR]) 1 November 2007 (2007-11-01) | 1,10, 12-14 | |
| A | * paragraph [0057] - paragraph [0061]; figure 4 * | 2-9,11 | |

TECHNICAL FIELDS
SEARCHED      (IPC)

G06F

The present search report has been drawn up for all claims

| Place of search | Date of completion of the search | Examiner |
|---|---|---|
| Berlin | 1 October 2015 | Virnik, Elena |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

             

& : member of the same patent family, corresponding
      document

EPO FORM 1503 03.82 (P04C01)

**EP 3 109 771 A1**

## ANNEX TO THE EUROPEAN SEARCH REPORT
## ON EUROPEAN PATENT APPLICATION NO.

EP 15 17 3150

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2015

| Patent document cited in search report | | Publication date | Patent family member(s) | | Publication date |
|---|---|---|---|---|---|
| US 2013198022 | A1 | 01-08-2013 | CN | 102456203 A | 16-05-2012 |
| | | | EP | 2630625 A1 | 28-08-2013 |
| | | | JP | 2013544000 A | 09-12-2013 |
| | | | US | 2013198022 A1 | 01-08-2013 |
| | | | WO | 2012054488 A1 | 26-04-2012 |
| US 2009309984 | A1 | 17-12-2009 | EP | 2033162 A2 | 11-03-2009 |
| | | | FR | 2903200 A1 | 04-01-2008 |
| | | | US | 2009309984 A1 | 17-12-2009 |
| | | | WO | 2008000711 A2 | 03-01-2008 |
| US 2007253472 | A1 | 01-11-2007 | US | 2007253472 A1 | 01-11-2007 |
| | | | US | 2011080902 A1 | 07-04-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WOO, MI-JA ; REITER, JEROME P. ; OGANIAN, ANNA ; KARR, ALAN F.** Global Measures of Data Utility for micro data Masked for Disclosure Limitation. *Journal of Privacy and Confidentiality,* 2009, vol. 1 (1

- **MANTEL, N.** The detection of disease clustering and a generalized regression approach. *Cancer Research,* vol. 27, 209-220